# EUROPEAN PATENT APPLICATION

(11) **EP 3 010 108 A1**
(43) Date of publication of application: **20.04.2016**
(21) Application number: 14189446.9
(22) Date of filing: 17.10.2014
(51) Int. Cl.: H02J 3/38

(54) **Method and system for regulating power and computer program product**

(71) Applicant: Argand Solutions Ltd, Totnes, Devon TQ9 5FZ (GB)
(72) Inventor: Markillie, Benjamin Robert, Totnes, Devon TQ9 5AP (GB)
(74) Representative: Mudge, Kevin

(57) **Abstract**

A method for regulating power exported to a distribution network from an installation including a variable output energy generation apparatus, the method comprising measuring exported power from the variable output energy generation apparatus using one or more instrument transformers coupled to respective ones of multiple supply lines of the installation, the or each instrument transformer coupled to a supply line at a point at which there is no load to a supply transformer of the distribution network between the point and the transformer, whereby to generate an instantaneous measure of the net exported power from the installation, comparing the measure of net exported power with a predefined threshold power value, and throttling exported power from the installation to the supply transformer using one or more switches operable to disconnect one or more of the supply lines from respective generation inverters of the installation so as to cause an open circuit configuration for the or each supply line in question in the event that the measure of net exported power exceeds or reaches the predefined threshold power value.

## Description

### TECHNICAL FIELD

Aspects relate, in general, to a method and system for regulating power exported to a distribution network from a variable output energy generation system, and to a computer program product.

### BACKGROUND

Variable energy sources, including renewable resources, such as wind, wave, and solar energy for example, are an attractive alternative to the use of fossil fuels in generating power due to their renewable nature and clean operation. However, unlike thermal power plants (such as coal-fired or natural gas fired plants for example) the amount of energy available at any given time cannot typically be controlled or reliably predicted. In addition, due to the inherent variability of these energy sources, such as gusts of wind gusts and/or directional changes, weather conditions and so on, the instantaneous power output of an associated power generator may vary significantly from one second to the next.

### SUMMARY

According to an example, there is provided a method for regulating power exported to a distribution network from an installation including a variable output energy generation apparatus, the method comprising measuring exported power from the variable output energy generation apparatus using one or more instrument transformers coupled to respective ones of multiple supply lines of the installation, the or each instrument transformer coupled to a supply line at a point at which there is no load to a supply transformer of the distribution network between the point and the transformer, whereby to generate an instantaneous measure of the net exported power from the installation, comparing the measure of net exported power with a predefined threshold power value, and throttling exported power from the installation to the supply transformer using one or more switches operable to disconnect one or more of the supply lines from respective generation inverters of the installation so as to cause an open circuit configuration for the or each supply line in question in the event that the measure of net exported power exceeds or reaches the predefined threshold power value. The open circuit configuration for the or each supply line can be maintained for a predefined period of time. The open circuit configuration for the or each supply line can be maintained until the measure of net exported power is less than the predefined threshold power value. Exported power from the variable output energy generation apparatus can be measured at periodic intervals. Exported power can be measured at intervals of up to 150ms. The exported power can be measured in units of a predetermined level of granularity, such as 1kW/100ms.

According to an example, there is provided a system for regulating power exported to a distribution network from an installation including a variable output energy generation apparatus, the system comprising a monitoring unit operable to measure exported power from the variable output energy generation apparatus using one or more instrument transformers coupled to respective ones of multiple supply lines of the installation, the or each instrument transformer coupled to a supply line at a point at which there is no load to a supply transformer of the distribution network between the point and the transformer, whereby to generate an instantaneous measure of the net exported power from the installation, and compare the measure of net exported power with a predefined threshold power value. and a control unit operable to throttle exported power from the installation to the supply transformer using one or more switches operable to disconnect one or more of the supply lines from respective generation inverters of the installation so as to cause an open circuit configuration for the or each supply line in question in the event that the measure of net exported power exceeds or reaches the predefined threshold power value. The control unit can maintain the open circuit configuration for the or each supply line for a predefined period of time. The control unit can maintain the open circuit configuration for the or each supply line until the measure of net exported power is less than the predefined threshold power value. The supply lines can provide a single or three phase supply to the generation inverters, wherein the or each switch is operable to disconnect the three phase supply. A neutral supply line connection between the distribution network and the generation inverters can be maintained. The control unit can include first and second relays operable to inhibit opening of a switch. The first relay can be a check relay operable to hold the second relay, an inhibit relay, open in the event that there is no supply present from the inverters, whereby to prevent a mains supply from the network being closed onto a live supply from the variable output energy generation apparatus. The monitoring unit and the control unit can be communicatively connected and situated within a predefined distance from one another in the system.

According to an example, there is provided a computer program product, comprising a computer usable medium having computer readable program code embodied therein, said computer readable program code adapted to be executed to implement a method for regulating power exported to a distribution network from a variable output energy generation system as provided herein.

### BRIEF DESCRIPTION OF THE DRAWINGS

Embodiments will now be described, by way of example only, with reference to the accompanying drawings, in which:
Figure 1 is a schematic representation of an installation according to an example;
Figure 2 is a schematic representation of a system according to an example;
Figure 3 is a schematic representation of a portion of a monitoring unit according to an example;
Figure 4 is a schematic representation of a portion of a control unit according to an example;
Figure 5 is a schematic representation of an installation according to an example;
Figure 6 is a schematic representation of a logical hierarchy for managing exported power according to an example; and
Figure 7 is a schematic representation of an installation according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

An organisation can use a variable output energy generation system installation that aligns with their on-site power load profile. Accordingly, they may reduce their reliance on power supplied by a power distribution network (power grid) by using power generated by variable sources such as renewable sources for example that form part of the system. The output of the system is variable in nature due to the unpredictable nature of the forces that generate the energy, such as wind, water and solar for example. Typically the system is connected to the grid at a point of connection and income or savings may be derived by feeding unused or excess power into the grid from the system.

Thus, for example, as the load on the system can fluctuate based on the needs of the organisation, excess power generated using the system can be fed into the distribution network. However, at times, the grid at the point of connection may not be able to absorb the output of the system. Accordingly, the power output must be limited or throttled so as not to exceed any potential restrictions applied by a distribution network operator.

According to an example, a system and method for regulating or limiting power exported to a distribution network from a variable output energy generation system is provided. Thus, restrictions in place on the level of power exported into a distribution network at a particular time and/or point can be overcome. Broadly speaking, exported power from a variable output energy generation system or apparatus is monitored at a connection point to the grid. An instantaneous measure of the net exported power from the system is generated, and this can be compared to a predefined threshold power value, such as a threshold value specified by the distribution network operator for example. Thus, typically, the threshold value specifies a maximum for the power that can be exported or fed into the distribution network at a particular point. The value may vary depending on the connection point of the system to the grid since the infrastructure varies geographically, with some regions able to absorb more than others for example.

In the event that the measure of net exported power exceeds or reaches the predefined threshold power value, exported power from the system can be throttled or limited in order to reduce or cut-off the supply into the distribution network. In an example, the exported power can be measured at periodic intervals, such as every 150ms for example, and preferably every 100ms for example. The comparison to the threshold can be performed at each measurement instance, or periodically with coarser granularity if desired.

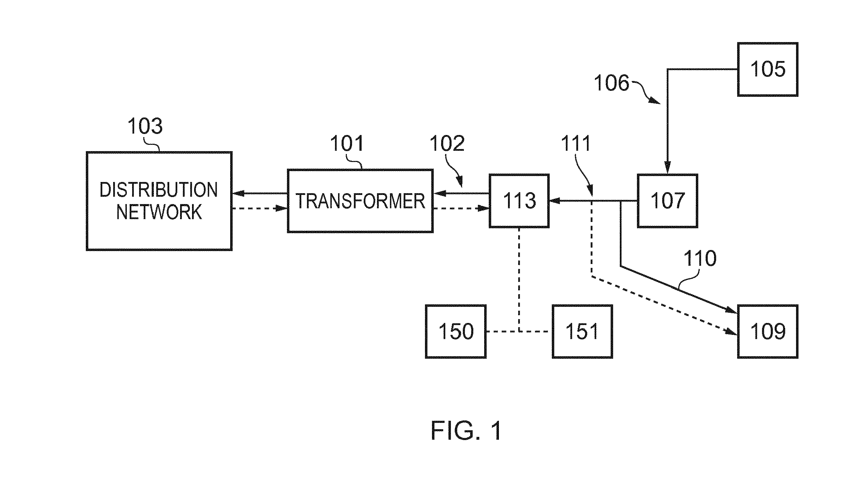

Figure 1 is a schematic representation of an installation according to an example. Restricted power 102 from a variable output energy generation apparatus 105 can be exported to a distribution network 103 via one or more transformers 101. The apparatus 105 can generate energy using one or more renewable sources for example, although other variable energy sources can be used as will be appreciated. The generated power 106 is fed to one or more generation inverters 107 to change a direct current (DC) supply from the system 105 to an alternating current (AC) supply 110 for an organisation such as a commercial site 109 for example. Unrestricted exported power 111 is provided to a system 113 for regulating power according to an example. The unrestricted exported power 111 is thus limited, restricted or throttled to provide the restricted output 102. In an example, the output 102 can be zero. That is, the exported power can be restricted to prevent output to the network 103.

In an example, the power supplied from the apparatus 105 can be supplemented with imported energy from the network 103, as depicted by the broken lines in figure 1. In an example, the system 113 is provided at a point in the installation at which there is no load to a supply transformer 101 between the point of connection and the transformer 101, whereby to enable generation of an instantaneous measure of the net exported power 102.

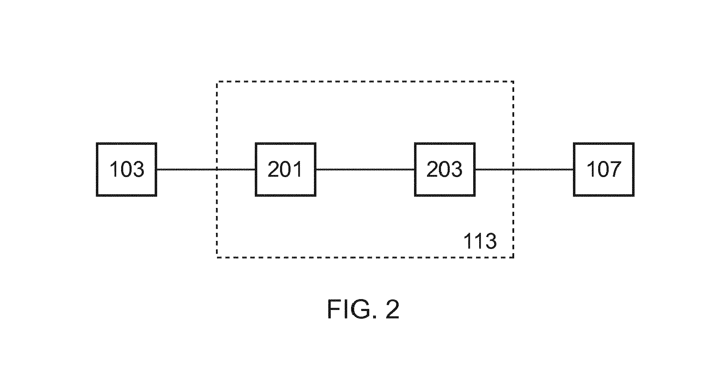

Figure 2 is a schematic representation of a system for regulating power according to an example. A monitoring unit 201 is located near the point of connection to the distribution network 103. For example, the monitoring unit 201 can be located at a point in an installation at which there is no load to a supply transformer of the network 103 between the point of connection and the transformer. That is, the monitoring unit 201 is located at a position that enables a measured value for the net exported power from an installation to be generated and which is not affected by upstream loads that would otherwise alter the value of the exported power.

A control unit 203 is provided. The control unit 203 is operable to throttle exported power from an installation. In an example, the monitoring unit 201 and the control unit are remotely located from one another, but are communicatively coupled, such as by typical wire or wireless communications means, and are within a predefined distance from another within the installation in question. For example, the units 201, 203 may be located within 500m of one another, or some other suitable distance within a range up to 1500m for example, whereby to enable prompt transmission of data between the two thereby enabling an exported power to be throttled quickly should the need arise.

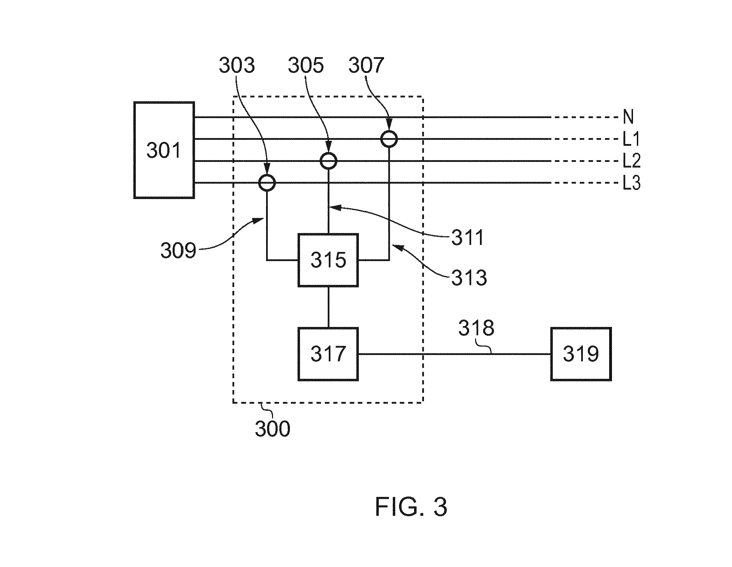

Figure 3 is a schematic representation of a portion of a monitoring unit 300 according to an example. Grid 301 provides, according to the example of figure 3, a three phase power supply (L1-3) as well as a neutral (N) line. Respective instrument transformers 303, 305 and 307, such as current transformers, are coupled to respective ones of supply lines L1-3 in order to measure exported power from a variable output energy generation apparatus (not shown). That is, the transformers 303, 305 and 307 enable generation of an instantaneous measure of the net exported power from an installation. The values for net exported power, 309, 311, 313 are input to controller 315 operable to control a control switch 317 that is connected to control unit 319 (described in more detail below).

Controller 315 is operable to compare the measures 309, 311, 313 of net exported power with a predefined threshold power value. More specifically, in the case of figure 3 in which a three phase supply is depicted, the measures can be used to generate an instantaneous value for the net exported power. If the net exported power exceeds the threshold value, controller 315 triggers switch 317, which can be a relay switch for example. Triggering switch 317 can cause a signal (or lack thereof) 318 to be present in control unit 319.

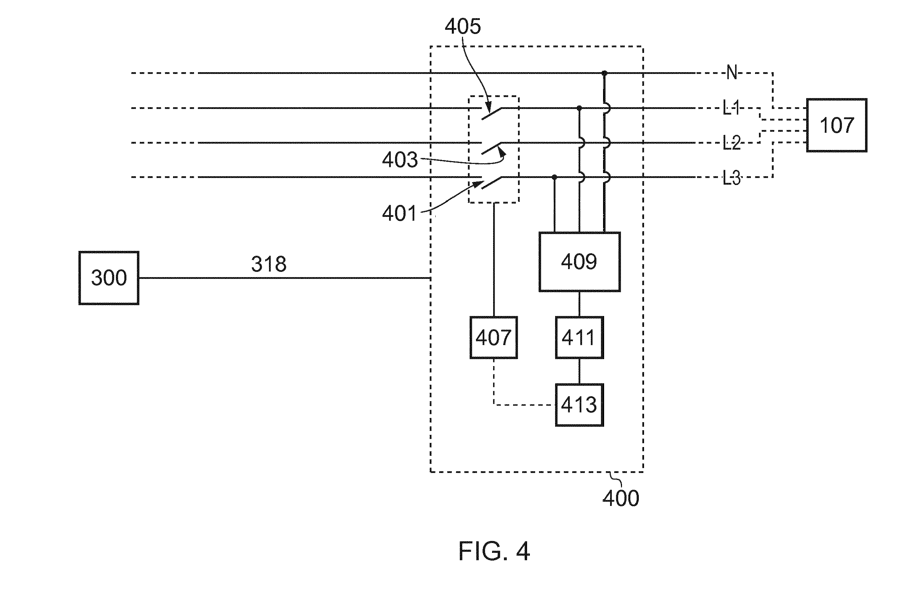

In this connection, figure 4 is a schematic representation of a portion of a control unit 400 according to an example. Triggering of switch 317 in the monitoring unit 300 indicates that the threshold value has been exceeded. In this connection, control unit 400 becomes aware that the threshold has been exceeded because a signal 318 is received, or because a signal that was being received before is interrupted as result of the triggering of the switch 317. That is, control unit 400 is responsive to a signal or lack of a signal from the monitoring unit 300.

In the example of figure 4, switches 401, 403 and 405 are operable to disconnect one or more of the supply lines L1-3 from respective generation inverters 107 of an installation. The switches are controlled by a cut-off contactor 407. An isolation transformer 409, with feed from the N and L1, L3 supply lines, controls a relay switch 411. The relay 411 is a check relay operable to hold open an inhibit relay 413 if a supply is received, thereby preventing the cut-off contactor connecting a mains supply onto a generated supply.

In an example, opening switches 401, 403, 405 causes an open circuit configuration for the or each supply line in question in the event that the measure of net exported power exceeds or reaches the predefined threshold power value. Accordingly, the control unit 400 is operable to throttle exported power from an installation to a supply transformer using the switches by disconnecting one or more of the supply lines from respective generation inverters of the installation.

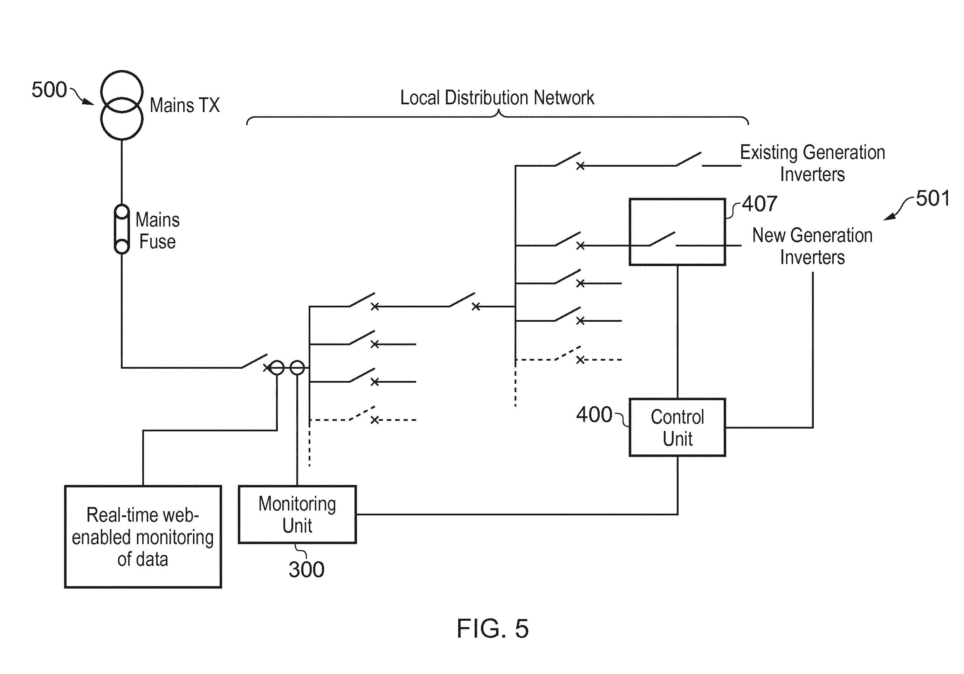

Figure 5 is a schematic representation of an installation according to an example. The relative positioning of the monitoring unit 300 and control unit 400 are depicted in relation to the grid 500 and inverters 501.

According to an example, the exported load can be monitored in real-time, for example by using an OEM's panel meter, at intervals of 100ms using class A current transformers attached to the clients grid connection point, with no other connected loads upstream from this point to the transformer. The exported load can be monitored at units of 1 kW per 100ms.

A system according to an example can have five outputs that enable different operations to be switched on / off when the exported load level reaches pre-agreed levels. At a pre-agreed level that is below the client transformer limit, the system can disconnect the inverters from the mains connection. The electricity generated will go into "open circuit" mode and will remain this way for a period to be agreed with the distributed network operator (e.g. 5 minutes) meeting their requirements. After the time delay, the system can meter the real-time exported load and continue in "open circuit" mode until the exported load is within the tolerated levels as defined.

This can provide a guarantee that if any other energy displacement strategies are still unable to reduce the exported load then the transformer limit will not be breached. In addition to the final cut-off contactor switch, the system also can include four other digital outputs which can be used to manage the generated load more effectively. These again have set levels (below the absolute transformer limit) at which the actions are enabled. These can be used to enable an inverter partial reduction system. This can dynamically reduce inverter outputs. In an example, settings could be:
a. At 90% of transformer limit, reduce inverter output to 90% of generation
b. At 95% of transformer limit, reduce inverter output to 60% of generation
c. At 97% of transformer limit, reduce inverter output to 10% of generation

Electrical energy can also be diverted to energy storage or equivalent. This can enable dynamic switching of load to on-site energy storage options e.g. thermal stores. The options are schematically represented in figure 1, in which an energy store 150 is depicted, along with an inverter management system 151.

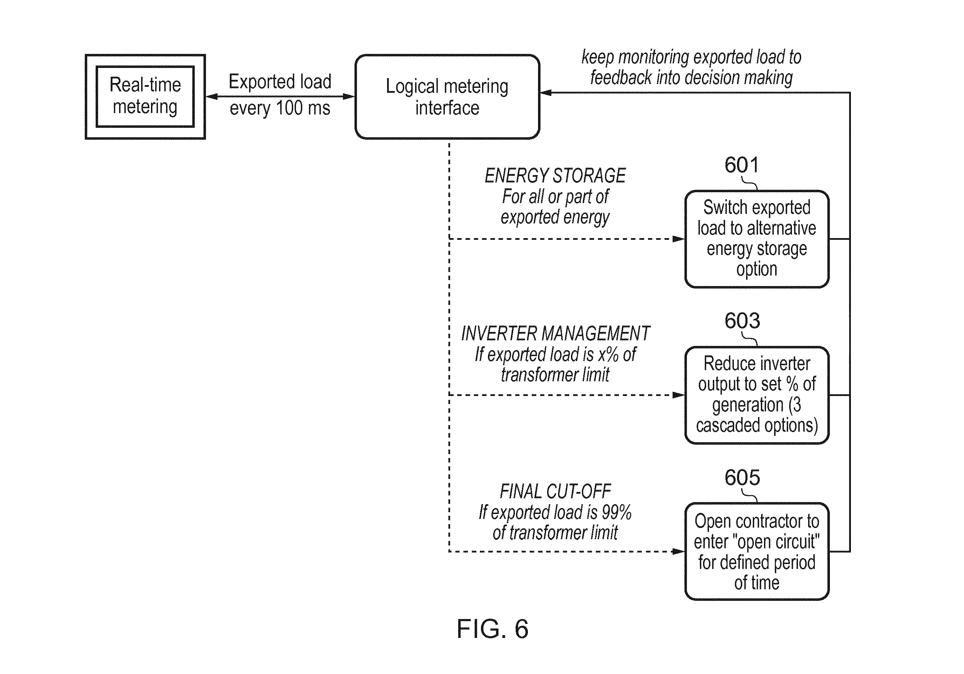

Figure 6 is a schematic representation of a logical hierarchy for managing exported power according to an example. As depicted in figure 6, measurement of exported power can enable various throttling solutions to be used, including energy storage 601, inverter management 603, and exported power throttling 605.

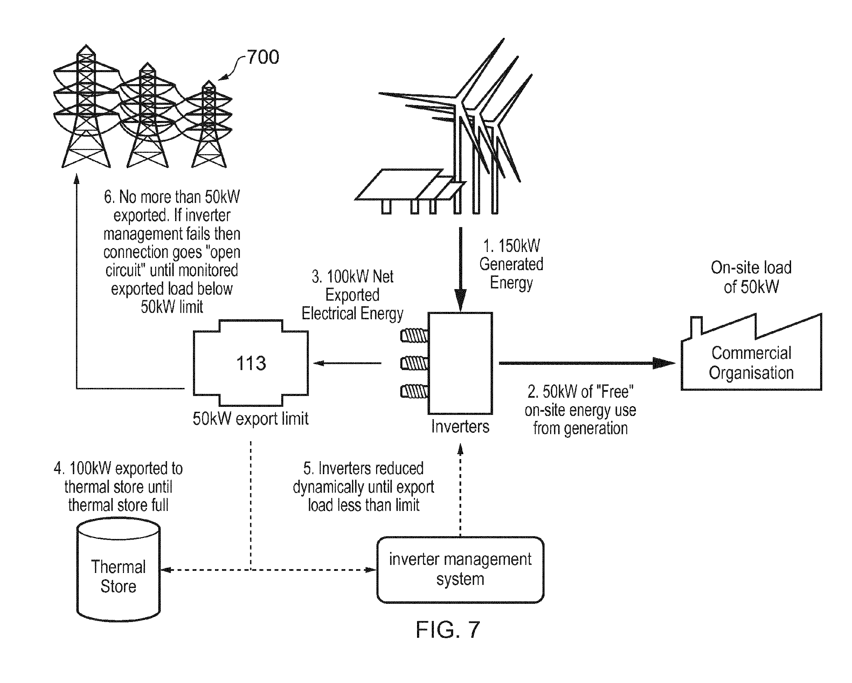

Figure 7 is a schematic representation of an installation according to an example. In this example, a client has a 50kW limit with 150kW total generation installed on-site. The energy generation produces a peak generation of 150 kW. The current load on-site is 50kW which is used fully by the commercial organisation. The residual 100 kW attempts to export to the Grid 700. If there is energy storage on site (e.g. thermal stores) then these will automatically absorb the electrical load that is excess to demand requirements. If there is no energy storage capacity and a dynamic inverter management system is in place, the system 113 can implement reduction switching until the generated load is below the agreed export limit (monitoring export levels every 100ms and switching in inverter management options according to monitored levels). If the inverter management will still not mitigate reduced exported levels below the limit then the system will go "open circuit" to protect the transformer. This will remain for an agreed period of time, whereupon the system will keep monitoring exported levels until they are back within tolerance.

The system is designed to 'fail safe' in all events, thus always protecting the grid and supply transformer. The Main Contactor will open-circuit in event of a system failure/fault, with loss of control power/mains supply, with loss of communication between the control and monitoring unit, or if the mains contactor is open it will be inhibited from closing in the event that both the mains supply and a generated supply are both present.

Typically, the response times of the system are as follows:
- Control unit communication cycle time = 100ms
- Contactor open time = 50ms

Therefore the maximum response time to open the circuit of the contactor according to an example will be at most 150ms. The primary function of the system is to prevent generated power from exceeding export limits by disconnecting the excess generated capacity from the mains. The system has the capability to reduce generated output via inverter interfaces. The system can interface with inverter manufacturer control systems, giving volt free signals to alter inverter output.

The system according to an example isolates the generation capacity that exceeds the permitted export threshold set by the DNO so there will not be a large sudden loss of generation capacity as the export limit is reached. This means that if the onsite load decreases at a point of high generation, meaning exported power would exceed the export limit, then only the upper portion of the total generated capacity will be instantaneously isolated - thus limiting voltage fluctuation. In this example, for this situation to happen the onsite load is decreasing, so the loss of generation and the net demand on the grid supply will be minimal, again limiting voltage fluctuation. Ideally a period of monitoring should be undertaken to predetermine typical operational load profiles to satisfactorily capture seasonal activity of the site.

Communication between the system components can be continuously monitored. Power loss response time may be, for example:
- Communication maximum response time = 100ms
- Contactor opening time = 50ms
- The software cycle time = < 5ms
- Controller reboot time = < 10 secs

The system will typically always be installed down stream of an appropriate protection device / breaker. The contactor can be supplied via a 415/240Vac control transformer that has an operational input voltage tolerance of ±15V. The contactor coil can have an under-voltage drop-out of 0.3 to 0.5 of Uc (Uc =240). The system will auto recover from a voltage dip, whereby the control function will reinstate the appropriate condition.

In an example, components of the system can be hard wired via RS485 serial coms cable with a maximum length of 1,500m. The communication link can be continuously monitored, and the device will fail safe (open contactor) in the event of lost communications e.g. wire gets cut.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for regulating power exported to a distribution network from an installation including a variable output energy generation apparatus, the method comprising:
measuring exported power from the variable output energy generation apparatus using one or more instrument transformers coupled to respective ones of multiple supply lines of the installation, the or each instrument transformer coupled to a supply line at a point at which there is no load to a supply transformer of the distribution network between the point and the transformer, whereby to generate an instantaneous measure of the net exported power from the installation;
comparing the measure of net exported power with a predefined threshold power value; and
throttling exported power from the installation to the supply transformer using one or more switches operable to disconnect one or more of the supply lines from respective generation inverters of the installation so as to cause an open circuit configuration for the or each supply line in question in the event that the measure of net exported power exceeds or reaches the predefined threshold power value.

2. A method as claimed in claim 1, further comprising:
maintaining the open circuit configuration for the or each supply line for a predefined period of time.

3. A method as claimed in claim 1 or 2, further comprising:
maintaining the open circuit configuration for the or each supply line until the measure of net exported power is less than the predefined threshold power value.

4. A method as claimed in any preceding claim, wherein exported power from the variable output energy generation apparatus is measured at periodic intervals.

5. A method as claimed in claim 4, wherein the exported power is measured at intervals of up to 150ms.

6. A method as claimed in either of claims 4 or 5, wherein the exported power is measured in units of a predetermined level of granularity, such as 1kW/100ms.

7. A system for regulating power exported to a distribution network from an installation including a variable output energy generation apparatus, the system comprising:
a monitoring unit operable to:
measure exported power from the variable output energy generation apparatus using one or more instrument transformers coupled to respective ones of multiple supply lines of the installation, the or each instrument transformer coupled to a supply line at a point at which there is no load to a supply transformer of the distribution network between the point and the transformer, whereby to generate an instantaneous measure of the net exported power from the installation; and
compare the measure of net exported power with a predefined threshold power value; and
a control unit operable to throttle exported power from the installation to the supply transformer using one or more switches operable to disconnect one or more of the supply lines from respective generation inverters of the installation so as to cause an open circuit configuration for the or each supply line in question in the event that the measure of net exported power exceeds or reaches the predefined threshold power value.

8. A system as claimed in claim 7, wherein the control unit is operable to maintain the open circuit configuration for the or each supply line for a predefined period of time.

9. A system as claimed in claim 7 or 8, wherein the control unit is operable to maintain the open circuit configuration for the or each supply line until the measure of net exported power is less than the predefined threshold power value.

10. A system as claimed in any of claims 7 to 9, wherein the supply lines provide a single or three phase supply to the generation inverters, wherein the or each switch is operable to disconnect the single or three phase supply.

11. A system as claimed in any of claims 7 to 10, further operable to maintain a neutral supply line connection between the distribution network and the generation inverters.

12. A system as claimed in any of claims 7 to 9, wherein the control unit includes first and second relays operable to inhibit opening of a switch.

13. A system as claimed in claim 12, wherein the first relay is a check relay operable to hold the second relay, an inhibit relay, open in the event that there is no supply present from the inverters, whereby to prevent a mains supply from the network being closed onto a live supply from the variable output energy generation apparatus.

14. A system as claimed in any of claims 7 to 13, wherein the monitoring unit and the control unit are communicatively connected and situated within a predefined distance from one another in the system.

15. A computer program product, comprising a computer usable medium having computer readable program code embodied therein, said computer readable program code adapted to be executed to implement a method for regulating power exported to a distribution network from a variable output energy generation system as claimed in any of claims 1 to 7.
